# FASCICULE DE BREVET EUROPEEN

(11) **EP 3 434 956 B1**
(45) Date de publication et mention de la délivrance du brevet: **12.02.2020**
(21) Numéro de dépôt: 18185126.2
(22) Date de dépôt: 24.07.2018
(51) Int. Cl.: F16L 37/107, F16L 37/252

(54) **ELÉMENT DE RACCORD POUR CONNECTER UNE CONDUITE DE FLUIDE**
ANSCHLUSSELEMENT ZUM VERBINDEN EINER FLUIDLEITUNG
CONNECTING ELEMENT FOR CONNECTING A FLUID LINE

(30) Priorité: 25.07.2017 FR 1757043
(43) Date de publication de la demande: 30.01.2019
(73) Titulaire: Staubli Faverges, 74210 Faverges-Seythenex (FR)
(72) Inventeur: TIBERGHIEN, Alain-Christophe, 74320 Sevrier (FR); DURIEUX, Christophe, 73200 Gilly sur Isere (FR)
(74) Mandataire: Lavoix

(56) Documents cités:
- EP-A1- 1 862 719
- DE-U1-202009 017 642
- FR-A1- 2 421 327
- US-A- 4 643 459
- US-A- 5 184 851

## Description

La présente invention concerne un élément de raccord pour connecter une conduite de fluide. L'invention concerne également un raccord comprenant un tel élément de raccord, connecté à un autre élément de raccord ou à un réservoir.

L'invention concerne notamment un élément de raccord permettant une connexion rapide d'une conduite de fluide à un orifice pourvu de dents qui appartient à un réservoir ou à un autre élément de raccord.

US-5 184 851-A décrit un élément de raccord connu, relié à une conduite et comportant, à son extrémité libre, des éléments de prise s'étendant longitudinalement à partir d'une surface d'appui. Lors de la connexion avec un autre élément de raccord semblable, les éléments de prise sont introduits entre des dents de l'autre élément de raccord jusqu'à ce que la surface d'appui entre en contact avec l'autre élément de raccord. Une rotation est nécessaire pour que les éléments de prise engagent les dents.

Pour éviter une déconnexion accidentelle, par exemple sous l'effet d'un couple de torsion exercé par la conduite, l'élément de raccord comporte un pion de verrouillage mobile entre une première position, dans laquelle il émerge de la face d'appui pour bloquer tout déplacement des dents en rotation par rapport aux éléments de prise, et une position escamotée, dans laquelle le déplacement des dents est permis, autorisant la rotation de l'élément de raccord par rapport à l'autre élément de raccord. Le pion de verrouillage est couplé mécaniquement à une bague circulaire entourant l'élément de raccord. Cette bague est mobile en rotation autour d'un axe longitudinal de l'élément de raccord. Pour déplacer le pion de verrouillage vers sa deuxième position, il faut faire tourner la bague dans un sens de rotation. Le pion de verrouillage est ensuite ramené automatiquement vers sa première position grâce à un ressort qui agit entre le corps de l'élément de raccord et le pion de verrouillage. Un ressort supplémentaire agit entre le corps de l'élément de raccord et la bague pour la faire tourner dans un sens de rotation opposé.

Cet élément de raccord connu a pour inconvénient que la force de rappel exercée sur la bague est en pratique insuffisante pour la ramener vers une position dans laquelle le pion de verrouillage est dans sa première position. Le verrouillage n'est donc pas assuré correctement, de sorte qu'il persiste un risque de déconnexion accidentelle. De par la conception de l'élément de raccord, l'espace disponible pour loger le ressort de rappel de la bague est limité, ce qui rend difficile l'utilisation d'un ressort capable d'exercer une force plus importante. En outre, la fabrication industrielle d'un tel élément de raccord est compliquée, du fait du nombre de pièces nécessaires, dont certaines sont très petites.

C'est à ces inconvénients qu'entend plus particulièrement remédier l'invention en proposant un élément de raccord pour connecter une conduite de fluide à mise en place rapide, dans lequel le risque de déconnexion accidentelle est réduit et dont la fabrication industrielle est simplifiée.

A cet effet, l'invention concerne un élément de raccord pour connecter une conduite de fluide à un élément complémentaire, notamment à un orifice d'un réservoir, cet élément de raccord comprenant un corps tubulaire s'étendant selon un axe longitudinal, le corps tubulaire étant muni, à une extrémité, d'une interface de connexion à une conduite de fluide et étant également muni, à une extrémité opposée, d'un élément de prise, l'élément de prise s'étendant longitudinalement par rapport à une surface d'appui perpendiculaire à l'axe longitudinal et comprenant une portion de collerette radiale orientée vers l'extérieur de l'axe longitudinal et s'étendant sur un secteur angulaire de prise. L'élément de raccord comprend également :
- au moins un pion de verrouillage mobile en translation à l'intérieur du corps tubulaire, parallèlement à l'axe longitudinal, entre une première position dans laquelle il émerge de la surface d'appui et une deuxième position dans laquelle il est reculé par rapport à la surface d'appui à l'intérieur du corps tubulaire,
- un organe de rappel destiné à ramener le pion de verrouillage vers sa première position,
- une bague de déverrouillage, entourant le corps tubulaire, à l'extérieur de celui-ci, la bague de déverrouillage étant mobile en rotation autour de l'axe longitudinal.

La bague de déverrouillage est couplée mécaniquement au pion de verrouillage au moyen d'une bille et d'une rainure hélicoïdale de guidage de la bille, de manière à transformer le mouvement de rotation de la bague de déverrouillage autour de l'axe longitudinal en un mouvement de translation du pion de verrouillage depuis sa première position vers sa deuxième position.

Grâce à l'invention, l'utilisation d'une bille et d'une rainure hélicoïdale pour coupler mécaniquement la bague de déverrouillage avec le pion de verrouillage permet de remédier aux inconvénients précités. Un tel couplage permet d'assurer une meilleure réversibilité du mouvement du pion de verrouillage. Cela permet également d'améliorer le rendement énergétique du système, en réduisant les frottements, grâce au fait que la bille roule dans la rainure. De fait, la force de rappel réellement reçue par la bague de déverrouillage est plus importante, par rapport aux cas connus. On réduit ainsi le risque que le pion de verrouillage ne retourne pas vers sa première position. La fiabilité du verrouillage en est ainsi améliorée.

Selon des aspects avantageux mais non obligatoires de l'invention, un tel élément de raccord peut incorporer une ou plusieurs des caractéristiques suivantes, prises isolément ou suivant toute combinaison techniquement admissible :
- La rainure hélicoïdale traverse une partie du corps tubulaire et la bague de déverrouillage comporte un logement de guidage longitudinal, la bille étant reçue à l'intérieur de la rainure hélicoïdale et du logement de guidage pour être guidée.
- La rainure hélicoïdale est ménagée sur une surface interne de la bague de déverrouillage, alors qu'une rainure longitudinale traverse une partie du corps longitudinal, la bille étant reçue à l'intérieur de la rainure hélicoïdale et du logement de guidage pour être guidée.
- La rainure hélicoïdale est ménagée sur une surface interne de la bague de déverrouillage, alors qu'une rainure longitudinale est solidaire du pion de verrouillage, la bille étant reçue à l'intérieur de la rainure hélicoïdale et de la rainure longitudinale pour être guidée.
- La bille coopère avec une gorge solidaire du pion de verrouillage, cette gorge étant délimitée suivant l'axe longitudinal par un bord proximal, la bille étant en outre reçue à l'intérieur de cette gorge et appuie sur ce bord proximal pour entraîner le pion de verrouillage vers sa deuxième position.
- Le pion de verrouillage est solidaire d'une bague d'entraînement mobile en translation le long de l'axe longitudinal, la gorge est ménagée sur cette bague d'entraînement et l'organe de rappel agit sur la bague d'entraînement.
- La gorge est ménagée directement sur le pion de verrouillage et forme la rainure longitudinale solidaire du pion de verrouillage et l'organe de rappel agit directement sur le pion de verrouillage.
- La gorge est également délimitée par un bord distal, de sorte que le bord distal soit en contact avec la bille et appuie sur la bille lorsque le pion de verrouillage est déplacé vers sa deuxième position sous l'effet d'une force extérieure à l'élément de raccord.
- L'élément de raccord comporte une soupape mobile en translation, à l'intérieur du corps tubulaire, entre une position de fermeture de passage du fluide et une position d'ouverture du passage du fluide, la soupape comprenant un palpeur rigide qui émerge de la surface d'appui lorsque la soupape est dans la position de fermeture.
- La rainure hélicoïdale de guidage de la bille suit une portion d'hélice circulaire dont l'angle de la tangente en chaque point par rapport à l'axe longitudinal est compris entre 30 et 60 degrés.
- L'angle de la tangente en chaque point par rapport à l'axe longitudinal est constant.

Selon un autre aspect, l'invention concerne un raccord comprenant un premier élément de raccord et un deuxième élément de raccord, au moins l'un des premier et deuxième éléments de raccord étant tel que décrit précédemment.

L'invention sera mieux comprise et d'autres avantages de celle-ci apparaîtront plus clairement à la lumière de la description qui va suivre, d'un mode de réalisation d'un élément de raccord donné uniquement à titre d'exemple et faite en référence aux dessins annexés dans lesquels :
- la figure 1 est une représentation schématique, selon une vue en perspective isométrique, d'un élément de raccord selon l'invention destiné à être connecté à un orifice circulaire d'un réservoir ;
- la figure 2 est une représentation schématique, selon une vue en coupes longitudinales, d'un élément de raccord selon un premier mode de réalisation de l'invention, dans lequel des moyens de verrouillage sont illustrés dans une première position;
- la figure 3 est une représentation schématique, selon une vue de profil partiellement écorchée, de l'élément de raccord de la figure 2 ;
- la figure 4 est une représentation schématique, selon une vue en coupes longitudinales, de l'élément de raccord de la figure 2, dans lequel les moyens de verrouillage sont illustrés dans une deuxième position ;
- la figure 5 est une représentation schématique de l'élément de raccord de la figure 3, dans lequel les moyens de verrouillage sont illustrés dans la deuxième position ;
- la figure 6 est une représentation schématique, selon une vue en coupes longitudinales, de l'élément de raccord de la figure 2 et de l'orifice du réservoir de la figure 1 dans une configuration désaccouplée ;
- la figure 7 est une représentation schématique de l'élément de raccord et de l'orifice du réservoir de la figure 6, selon une vue de face dans le plan VII-VII de la figure 6;
- la figure 8 est une représentation schématique, selon une vue en coupes longitudinales, de l'élément de raccord de la figure 2 et de l'orifice du réservoir de la figure 1 dans une configuration accouplée ;
- la figure 9 est une représentation schématique de l'élément de raccord et de l'orifice du réservoir de la figure 8, selon une vue de face dans le plan IX-IX de la figure 8 ;
- les figures 10 et 11 représentent schématiquement un élément de raccord selon un deuxième mode de réalisation de l'invention, illustré respectivement, selon une vue en coupes longitudinales et selon une vue de profil ;
- la figure 12 est une représentation schématique, selon une vue en coupes longitudinales, d'un élément de raccord selon un troisième mode de réalisation de l'invention ;
- la figure 13 est une représentation schématique, selon une vue en coupes longitudinales, d'un élément de raccord selon un quatrième mode de réalisation de l'invention ;
- la figure 14 est une représentation schématique, selon une vue en coupes longitudinales, d'un élément de raccord selon un cinquième mode de réalisation de l'invention ;
- les figures 15 à 18 représentent schématiquement un élément de raccord selon un sixième mode de réalisation de l'invention ;
- la figure 19 représente schématiquement deux éléments de raccord destinés à être connectés entre eux pour former un raccord et dont au moins l'un d'entre eux est conforme à l'un des modes de réalisation de l'invention.

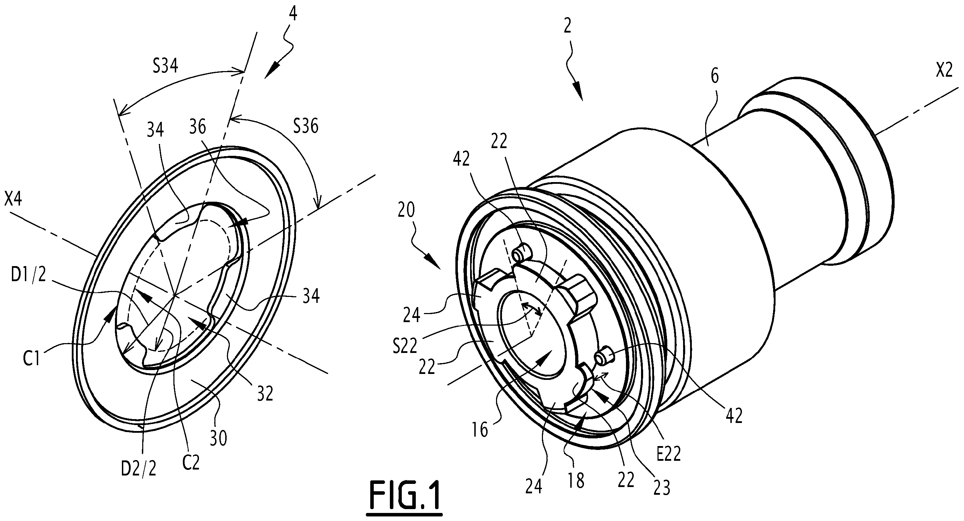

Les figures 1 à 9 représentent un élément de raccord 2 destiné à connecter une conduite d'alimentation d'un fluide, tel qu'un liquide, à un élément complémentaire pour permettre la circulation de ce fluide entre les deux éléments.

Dans cet exemple, l'élément complémentaire est un orifice 4 circulaire d'un réservoir. La connexion entre l'élément de raccord 2 et l'orifice 4 a pour but d'assurer le remplissage de ce réservoir de façon étanche.

L'invention s'applique tout particulièrement à la connexion rapide d'une canalisation de liquide de refroidissement à un réservoir équipant un véhicule automobile en vue de son remplissage. L'élément de raccord 2 est alors connecté temporairement à l'orifice 4 du réservoir, celui-ci étant conçu pour accueillir un bouchon à mise en place rapide par vissage.

Bien entendu, d'autres applications sont possibles, par exemple dans le domaine médical ou alimentaire. L'élément complémentaire peut être autre chose qu'un orifice 4 de réservoir. Ainsi, tout ce qui est décrit dans ce qui suit en référence à l'orifice 4 s'applique également à un tel élément complémentaire.

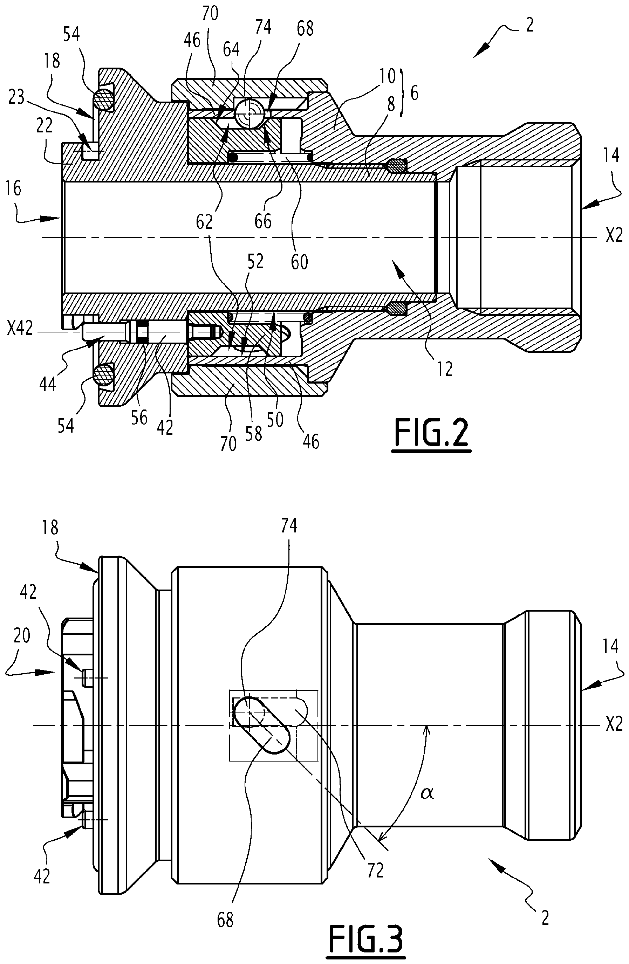

Comme illustré plus particulièrement à la figure 2, l'élément de raccord 2 comporte un corps tubulaire 6 comprenant un embout 8 et un adaptateur 10, ici vissés l'un dans l'autre. Le corps tubulaire 6 s'étend essentiellement selon un axe longitudinal X2 de l'élément de raccord. Dans cet exemple, l'embout 8 et l'adaptateur 10 sont disposés de façon coaxiale autour de l'axe longitudinal X2.

Ce corps tubulaire 6 définit un passage cylindrique 12 creux autorisant la circulation d'un fluide, ici d'un liquide.

Le corps tubulaire 6 comporte une ouverture d'entrée 14 qui forme une interface de connexion avec une conduite de fluide. Par exemple, l'ouverture d'entrée 14 est un trou taraudé qui permet une connexion étanche avec une canalisation filetée. Dans cet exemple, l'ouverture d'entrée 14 est ménagé sur une partie arrière du corps 6, ici sur l'adaptateur 10.

Le corps tubulaire 6 comporte, sur son extrémité opposée à l'ouverture d'entrée 14, une ouverture de sortie 16 qui est ici destiné à déboucher vers l'intérieur du réservoir lorsque l'élément de raccord 2 est connecté à ce réservoir. L'ouverture de sortie 16 est ici disposée sur une partie avant du corps tubulaire 6.

Bien entendu, le fluide peut circuler à l'intérieur du passage 12 dans un sens ou dans l'autre entre l'ouverture d'entrée 14 et l'ouverture de sortie 16.

Le corps tubulaire 6 comporte en outre une surface d'appui 18, ici essentiellement plane, qui est ménagée au niveau de son extrémité avant, ici sur l'embout 8, et qui s'étend perpendiculairement à l'axe longitudinal X2.

L'élément de raccord 2 comporte une partie tubulaire avant 20 qui s'étend en saillie par rapport à la surface d'appui 18 le long de l'axe longitudinal X2.

La partie tubulaire 20 comporte, à son extrémité, au moins une portion de collerette 22 qui occupe un secteur angulaire S22 défini entre deux plans coaxiaux avec l'axe longitudinal X2 et qui définit un secteur angulaire de prise. Ce secteur angulaire de prise S22 est défini par rapport à un point central passant par l'axe longitudinal X2.

Chaque portion de collerette 22 est associée à une butée 24 qui fait partie de la partie tubulaire 20. On note 23 le volume de prise compris entre une portion de collerette 22 et la face d'appui 18, ce volume de prise 23 présentant une longueur E22 mesurée parallèlement à l'axe longitudinal X2 et appelée espacement E22.

Dans cet exemple, les portions de collerette 22 sont au nombre de trois et sont identiques entre elles et espacées l'une de l'autre avec un espacement angulaire régulier.

Comme illustré à la figure 1, l'orifice 4 comporte une plaque 30 plane pourvue d'une ouverture centrale 32 sur le bord de laquelle est ménagée au moins une dent 34.

Les dents 34 s'étendent depuis un bord de l'ouverture centrale 32 vers le centre de l'orifice 4, entre un premier contour circulaire C1 de l'ouverture centrale 32 de l'orifice 4 présentant un grand diamètre D1 et un deuxième contour circulaire C2 de l'ouverture centrale 32 de l'orifice 4 présentant un petit diamètre D2 inférieur au grand diamètre D1. A la figure 1, seuls les rayons correspondants aux contours circulaires C1 et C2 sont illustrés, respectivement, par les références D1/2 et D2/2.

On note X4 un axe de l'orifice 4 s'étendant perpendiculairement à cet orifice et passant par le centre de l'ouverture centrale 32. Le petit diamètre D2 et le grand diamètre D1 sont définis par rapport au centre de l'ouverture centrale 32. Les contours circulaires C1 et C2 sont concentriques. L'axe X4 est ici perpendiculaire au plan géométrique de la plaque 30. Les dents 34 sont séparées deux à deux par des espaces inter-dents 36.

De préférence, le nombre de dents 34 et leur forme sont complémentaires au nombre et à la forme des portions de collerette 22 de la partie tubulaire 20 de l'élément de raccord 2. Dans cet exemple, le réservoir 4 est pourvu de trois dents 34 identiques régulièrement espacées.

Les dents 34 de l'orifice 4 et les secteurs angulaires de prise S22 formés par les portions de collerette 22 sont complémentaires et sont destinées à solidariser l'élément de raccord 2 à l'orifice 4 préalablement à la mise en circulation d'un fluide. Les secteurs angulaires de prise S22 formés par les portions de collerette 22 sont adaptés pour être contenus dans les espaces angulaires 36 qui séparent les dents 34 de l'orifice. On note S34 les secteurs angulaires associés aux dents 34 et on note S36 les secteurs angulaires associés aux espaces inter-dents 36.

L'élément de raccord et l'orifice 4 sont ainsi adaptés pour être déplacés, de façon réversible, entre une configuration connectée, aussi dite configuration accouplée, et une configuration déconnectée l'un de l'autre, aussi dite configuration désaccouplée.

L'élément de raccord 2 comporte en outre des moyens de verrouillage pour maintenir l'élément de raccord 2 verrouillé dans la configuration accouplée avec l'orifice 4.

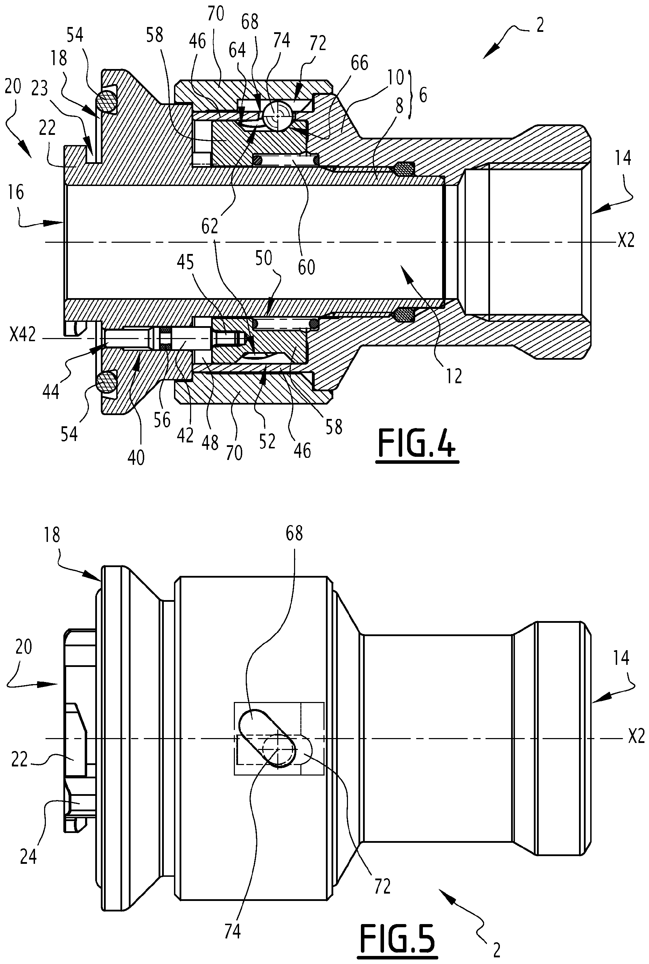

Comme illustré aux figures 2 et 4, le corps tubulaire 6 comporte un ou plusieurs logements cylindriques 40, parallèles à l'axe longitudinal X2, ici ménagés à l'avant de l'embout 8.

Ces logements 40 sont ici au nombre de trois et sont régulièrement répartis autour de l'axe longitudinal X2. En variante, leur nombre peut être différent. Ces logements 40 sont ici identiques entre eux et jouent un même rôle, de sorte que seul l'un d'entre eux est décrit plus en détail dans ce qui suit. Sur les figures 2 et 4, seul un des logements 40 est visible.

Chaque logement 40 comporte un pion de verrouillage 42 reçu dans ce logement et mobile en translation selon un axe X42 parallèle à l'axe longitudinal X2. L'axe X42 définit ici un axe de symétrie du logement 40. On note « 44 » une extrémité avant du pion de verrouillage 42 et on note « 45 » une extrémité arrière de ce même pion de verrouillage 42.

Les logements 40 sont agencés de manière à déboucher, du côté avant de l'élément de raccord 2, au niveau de la surface d'appui 18 en dehors des secteurs angulaires de prise S22. Du côté arrière, le corps tubulaire 6 comporte, au niveau de l'adaptateur 10, une extension tubulaire 46. Les logements 40 débouchent ainsi à l'arrière chacun dans un logement 48globalement tubulaire défini entre une surface externe 50 cylindrique de l'embout 8 et une surface interne 52 cylindrique de l'extension tubulaire 46.

Les surfaces cylindriques 50 et 52 sont disposées de façon coaxiale autour de l'axe longitudinal X2. De même, l'extension tubulaire 46 et le logement 48 sont disposés de façon coaxiale autour de l'axe longitudinal X2. Le logement 48 est délimité de part et d'autre par un plan transversal avant et un plan transversal arrière, tous deux perpendiculaires à l'axe longitudinal X2.

L'élément de raccord 2 comporte avantageusement un joint torique 54, disposé dans un logement circulaire ménagé sur la surface d'appui 18, ici avec un diamètre supérieur au diamètre de l'ouverture avant 16.

Dans cet exemple, les logements 40 débouchent sur la surface d'appui 18 à l'intérieur du disque délimité par le logement circulaire du joint torique 54. Afin d'assurer une bonne étanchéité de l'élément de raccord 2, chaque pion de verrouillage 42 comporte un joint torique 56, par exemple fixé solidairement au corps du pion de verrouillage 42 et étant dimensionné de manière à autoriser le déplacement du pion de verrouillage 42 en translation tout en empêchant le passage du fluide dans le logement 40.

Les joints toriques 54 et 56 sont ici réalisés dans un matériau élastomère.

Chaque pion de verrouillage 42 est déplaçable, de façon réversible, entre une première position et une deuxième position.

Dans la première position, aussi dite position avancée, chaque pion de verrouillage 42 émerge de la surface d'appui 18, du côté avant du logement 40, en faisant saillie par rapport à la surface d'appui 18, comme cela est illustré aux figures 1, 2, 3, 8 et 9. Dans cette position avancée, le pion de verrouillage 42 émerge de la surface d'appui 18 avec une longueur suffisante pour empêcher l'accès au volume de prise 23 délimité par la portion de collerette 22.

Par exemple, dans cette première position, la longueur émergée du pion de verrouillage 42 est supérieure ou égale à la moitié de l'espacement E22 et, de préférence, supérieure ou égale à l'espacement E22. Cette longueur émergée est ici définie comme étant égale à la distance entre la surface d'appui 18 et la face avant 44 du pion de verrouillage 42, mesurée parallèlement à l'axe longitudinal X2.

Dans la deuxième position, aussi dite position rétractée, la partie avant de chaque pion de verrouillage 42 est rétractée à l'intérieur du logement 40 correspondant par rapport à la surface d'appui 18, comme cela est illustré aux figures 4, 5, 6 et 7. Dans cette position rétractée, le pion de verrouillage 42 n'émerge plus suffisamment de la surface d'appui 18 pour empêcher l'accès au volume de prise 23 délimité par la portion de collerette 22.

Pour des raisons pratiques de construction de l'élément de raccord 2, il peut arriver que, dans la position rétractée, une portion d'extrémité du pion de verrouillage 42 émerge faiblement en saillie par rapport à la surface d'appui 18. Toutefois, cette émergence n'est pas suffisante pour empêcher l'accès au volume de prise 23. Par exemple, dans la position rétractée, la longueur émergée du pion de verrouillage 42 est inférieure ou égale au quart de l'espacement E22.

L'élément de raccord 2 comporte en outre une bague d'entraînement 58 qui occupe une partie du logement 48. La bague d'entraînement 58 présente ici une forme cylindrique ayant pour axe l'axe longitudinal X2. La bague d'entraînement 58 présente une longueur, mesurée parallèlement à l'axe X2, qui est inférieure à la longueur du logement 48, de manière à pouvoir se déplacer en translation le long de l'axe longitudinal X2 au sein de ce logement 48.

Les pions de verrouillage 42 sont maintenus solidaires sans degré de liberté avec la bague d'entraînement 58, ici au niveau de leurs extrémités arrière 45 respectives. Par exemple, les pions de verrouillage 42 sont maintenus par vissage.

Ainsi, grâce à la bague d'entraînement 58, le déplacement de tous les pions de verrouillage 42 est simultané.

Lorsque la bague d'entraînement 58 est en butée vers l'avant du logement 48, les pions de verrouillage 42 sont dans leur position avancée. Au contraire, lorsque la bague 58 est en butée vers l'arrière du logement 48, les pions de verrouillage 42 sont dans leur position rétractée.

L'élément de raccord 2 comporte également un ou plusieurs organes de rappel 60, destinés à ramener le pion de verrouillage 42 vers sa position avancée. A cet effet, les organes de rappel 60 sont chacun adaptés pour exercer une force de rappel élastique, ici suivant une direction parallèle à l'axe longitudinal X2, qui ramène les pions de verrouillage 42 vers leur position avancée.

Dans cet exemple, l'organe de rappel 60 agit d'une part entre le corps tubulaire 6 et, d'autre part, la bague d'entraînement 58. La force de rappel est ainsi exercée sur les pions de verrouillage 42 par l'intermédiaire de la bague d'entraînement 58.

Par exemple, l'organe de rappel 60 est un ressort, tel qu'un ressort métallique de compression, ici disposé de façon coaxiale avec l'axe X2. En variante, l'organe de rappel 60 peut être réalisé différemment, par exemple à partir d'une lame élastique en matière plastique. L'usage de matière plastique est avantageux lorsque le corps tubulaire 6 est réalisé en matière plastique.

La bague d'entraînement 58 comporte en outre une gorge externe 62 présentant un fond plat. Cette gorge 62 est ménagée sur tout le pourtour extérieur de la bague d'entraînement 58. La gorge 62 s'étend longitudinalement selon l'axe X2 entre un bord distal 64 et un bord proximal 66 qui sont tous deux solidaires de la bague d'entraînement 58 et qui sont inclinés par rapport au fond plat.

Dans cet exemple, la gorge 62 est indirectement solidaire du pion de verrouillage 42, par l'intermédiaire de la bague d'entraînement 58.

L'extension tubulaire 46 comporte quant à elle une rainure hélicoïdale 68. Cette rainure hélicoïdale 68 est ici formée par une ouverture oblongue traversante, qui décrit une portion d'hélice circulaire dont l'axe correspond à l'axe longitudinal X2. La rainure hélicoïdale 68 dispose de deux parois parallèles qui suivent une portion d'hélice circulaire dont la tangente en chaque point fait un angle α constant avec l'axe longitudinal X2. Cet angle α est ici de de 45° par rapport à l'axe longitudinal X2.

L'élément de raccord 2 comporte en outre une bague de déverrouillage 70 montée autour du corps 6. Dans cet exemple, la bague de déverrouillage 70 entoure en partie l'extension tubulaire 46 et l'embout 8. Cette bague de déverrouillage 70 présente essentiellement une forme d'anneau dont l'axe coïncide avec l'axe longitudinal X2. Cette bague de déverrouillage 70 est montée en rotation autour de l'axe longitudinal X2 par rapport à l'extension tubulaire 46 et à l'embout 8. En revanche, la bague de déverrouillage 70 n'est ici de préférence pas mobile en translation le long de l'axe longitudinal X2.

La bague de déverrouillage 70 comporte une surface externe tournée vers l'extérieur de l'élément de raccord 2 et étant accessible depuis l'extérieur de celui-ci. A l'opposé, elle comporte une surface cylindrique interne qui est tournée vers l'intérieur de l'élément de raccord 2 et, plus précisément, vers le passage cylindrique 12.

La bague de déverrouillage 70 comporte ici, sur sa surface cylindrique interne, un logement de guidage 72 longitudinal s'étendant parallèlement à l'axe X2. Ce logement de guidage 72 présente ici une forme de rainure oblongue délimitée par des parois longitudinales parallèles à l'axe longitudinal X2. Autrement dit, ce logement de guidage 72 ne s'étend notamment pas sur tout le pourtour de la surface cylindrique interne.

L'élément de raccord 2 comporte en outre une bille 74 sphérique qui est reçue dans l'espace défini par la gorge externe 62 de la bague d'entraînement 58, par la rainure hélicoïdale 68 de l'extension tubulaire 46 et par le logement de guidage 72 de la bague de déverrouillage 70. La rainure hélicoïdale 68 et le logement de guidage 72 ont une largeur sensiblement égale au diamètre de la bille 74 afin d'assurer son guidage.

La bille 74 est, de préférence, réalisée dans une matière rigide qui n'est pas susceptible de se déformer lorsqu'elle est sollicitée mécaniquement par les composants de l'élément de raccord 2. Par exemple, la bille 74 est réalisée en matière métallique, par exemple en acier. En variante, la bille 74 est réalisée en céramique, ou en matière plastique thermoformée.

Dans cet exemple, la rainure hélicoïdale 68 forme un moyen de guidage de la bille 74, pour transformer le mouvement de rotation de la bague de déverrouillage 70 autour de l'axe longitudinal X2 en un mouvement de translation de la bague d'entraînement 58 selon ce même axe longitudinal X2.

Ainsi, dans ce mode de réalisation, le logement de guidage 72, la rainure hélicoïdale 68 et la gorge 62 associées à la bille 74 assurent un couplage mécanique entre la bague de déverrouillage 70 et le pion de verrouillage 42.

Plus précisément, dans ce mode de réalisation, ce couplage permet de convertir la rotation de la bague de déverrouillage 70 en une translation du pion de verrouillage 42, mais pas l'inverse. En d'autres termes, ici, le déplacement en translation du pion de verrouillage 42 n'entraîne pas un mouvement correspondant de rotation de la bague de déverrouillage 70.

Un tel comportement est notamment causé par l'écartement entre le bord distal 64 et le bord proximal 66 qui est ici suffisamment grand pour que, lorsque le pion de verrouillage 42 se déplace depuis la position avancée vers la position rétractée, et que la bague d'entraînement 58 se déplace en translation avec le pion de verrouillage 42, le bord distal 64 ne vient pas en contact avec la bille 74 et ne peut donc pas l'entraîner en déplacement. La bague de déverrouillage 70 reste alors immobile. En variante, la gorge 62 peut ne pas présenter de bord distal 64.

Les pions de verrouillage 42 forment ainsi des moyens de verrouillage pour maintenir l'élément de raccord 2 dans une configuration accouplée avec l'orifice circulaire du réservoir 4.

Le corps tubulaire 6 est de préférence réalisé en matière métallique. Il en va de même pour les bagues d'entraînement 58 et de déverrouillage 70. En variante, toutefois, il est possible d'utiliser un autre matériau, par exemple une matière plastique.

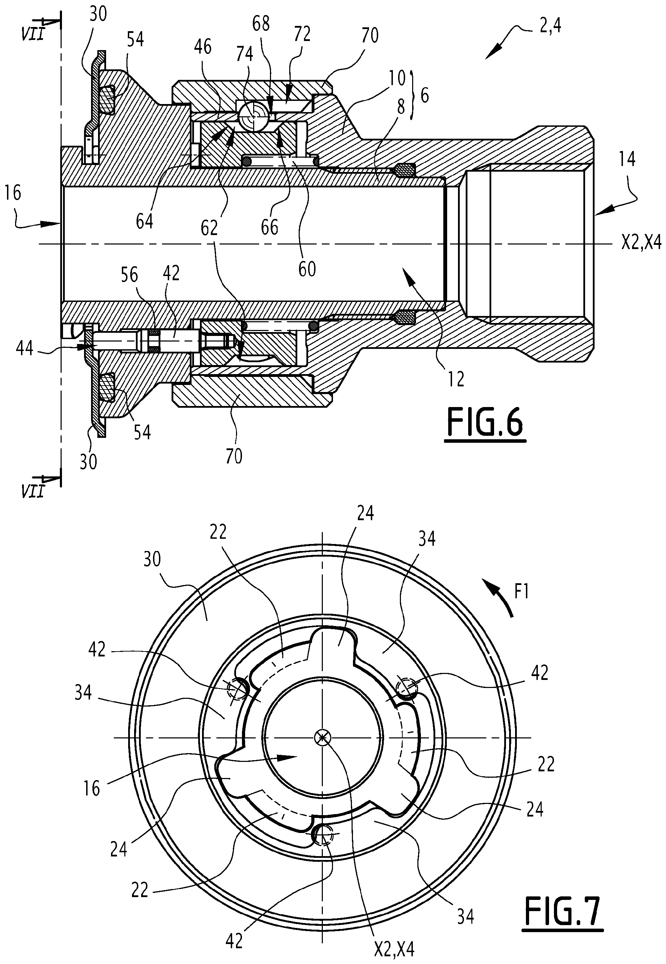

Comme illustré en référence aux figures 6 à 9, l'accouplement de l'élément de raccord 2 avec l'orifice 4 se déroule de la façon suivante.

D'abord, l'élément de raccord 2 est amené en face de l'orifice 4, de manière à ce que leurs axes longitudinaux respectifs X2 et X4 coïncident entre eux et que les secteurs angulaires de prise S22 de la partie tubulaire avant 20 soient disposés en regard des espaces inter-dents 36 de l'orifice 4.

Ensuite, l'élément de raccord 2 est rapproché de l'orifice 4, tout en maintenant les axes X2 et X4 confondus l'un avec l'autre, jusqu'à ce que la surface d'appui 18 entre directement en contact avec la plaque 30 de l'orifice 4. Les pions de verrouillage 42 se trouvent alors disposés en regard des dents 34 de l'orifice 4.

Sous l'effet de la force d'appui de l'élément de raccord 2 sur l'orifice 4, qui surpasse la force de rappel exercée par l'organe de rappel 60, les pions de verrouillage 42 sont repoussés vers leur position rétractée à l'intérieur de leur logement 40 respectif, leur face avant 44 étant en contact avec les dents 34, comme illustré à la figure 7.

Ensuite, l'élément de raccord 2 et l'orifice de réservoir 4 sont tournés l'un par rapport à l'autre autour de leurs axes longitudinaux X2 et X4 pour les amener dans leur configuration accouplée.

Par exemple, l'élément de raccord 2 est tourné par rapport à l'orifice 4 dans le sens illustré par la flèche F1 à la figure 7.

Du fait de ce mouvement de rotation, chaque dent 34 pénètre dans le volume de prise 23 compris entre la portion de collerette 22 correspondante et la surface d'appui 18, jusqu'à ce que cette dent 34 parvienne en contact avec la butée 24 associée à cette portion de collerette 22.

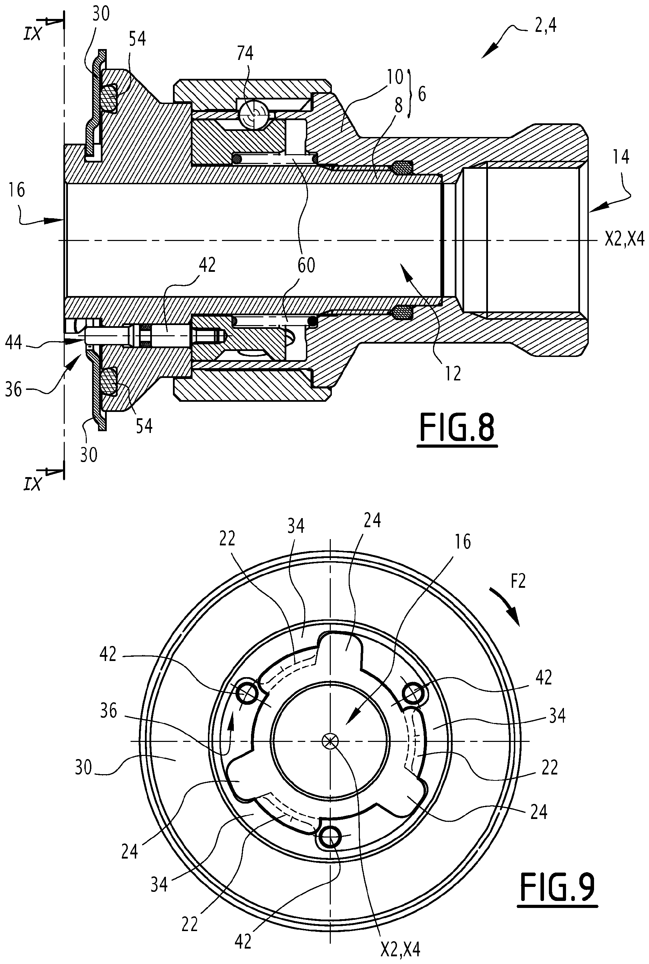

Lorsqu'elles sont dans cette position de butée, les dents 34 ne recouvrent plus les pions de verrouillage 42, qui se trouvent alors disposés en regard des espaces inter-dents 36, comme cela est visible à la figure 9. Dans ce cas, les pions de verrouillage 42 sont ramenés vers leur première position par l'organe de rappel 60, puisque les dents 34 ne s'opposent plus à cette force de rappel.

Ainsi, les pions de verrouillage 42, du fait de leur position avancée par rapport à la face d'appui 18, empêchent les dents 34 de quitter le volume de prise 23 par un mouvement de rotation inverse.

L'élément de raccord 2 est alors maintenu verrouillé dans la configuration accouplée avec l'orifice 4. L'élément de raccord 2 ne peut pas être désaccouplé de l'orifice 4 en exerçant un mouvement de rotation sur la conduite de fluide, même involontaire.

Pour désaccoupler l'élément de raccord 2 de l'orifice 4, les pions de verrouillage 42 doivent au préalable être ramenés dans leur position rétractée en actionnant la bague de déverrouillage 70. Par exemple, la bague de déverrouillage 70 est déplacée par un mouvement de rotation autour de l'axe longitudinal X2 dans un sens de rotation inverse de celui mis en œuvre pour l'accouplement.

Lorsque la bague de déverrouillage 70 tourne en rotation, les parois du logement de guidage 72 poussent la bille 74 latéralement, ce qui met la bille 74 en mouvement et la fait glisser le long de l'ouverture oblongue formant la rainure hélicoïdale 68 de l'extension tubulaire 46. Au fur et à mesure que la bague de déverrouillage 70 continue à tourner, la bille 74 parcourt la portion d'hélice définie par la rainure hélicoïdale 68, jusqu'à venir en butée avec le bord proximal 66 de la gorge 62. Une fois en butée avec le bord proximal 66, elle continue à glisser le long de la rainure hélicoïdale 68, en entraînant la bague d'entraînement 58 en translation le long de l'axe longitudinal X2, vers l'arrière du corps tubulaire 6. Comme les pions de verrouillage 42 sont solidaires de la bague d'entraînement 58, ils se déplacent alors vers leur position rétractée. Ce mouvement se poursuit tant que la bague de déverrouillage 70 tourne, jusqu'à ce que la bague d'entraînement 58 arrive en butée sur le fond arrière du logement 48, ici contre l'adaptateur 10.

A ce stade, les pions de verrouillage 42 ont atteint leur position rétractée. En particulier, ces pions de verrouillage 42 n'émergent plus suffisamment par rapport à la surface d'appui 18 pour empêcher un déplacement des dents 34. L'élément de raccord 2 et l'orifice 4, bien que toujours accouplés entre eux, ne sont plus verrouillés.

L'élément de raccord 2 et l'orifice 4 peuvent alors être tournés l'un par rapport à l'autre dans un sens inverse à celui précédemment décrit lors de l'étape d'accouplement, de manière à dégager les dents 34 des volumes de prise 23 à l'intérieur desquels elles sont reçues jusqu'à ce que les portions de collerette 22 soient disposées en regard des espaces inter-dents 36 de l'orifice 4. L'élément de raccord 2 est alors désaccouplé du réservoir 4 et peut en être éloigné.

Par exemple, ce mouvement de désaccouplement peut être apporté en continuant à tourner la bague de déverrouillage 70 dans le même sens, ici illustré par la flèche F2 à la figure 9, pour qu'elle entraîne en rotation tout le corps tubulaire 6 jusqu'à faire sortir les dents 34 hors des secteurs angulaires de prise S22. En variante, l'élément de raccord 2 peut être empoigné directement pour le faire tourner dans le sens souhaité.

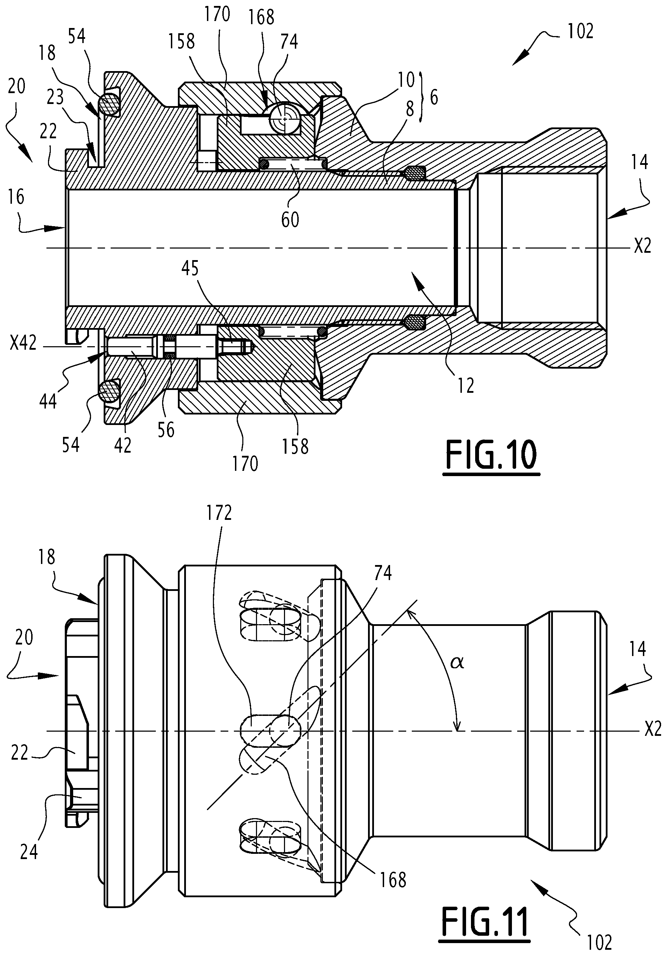

Les figures 10 et 11 représentent un élément de raccord 102 selon un deuxième mode de réalisation de l'invention. Les composants de l'élément de raccord 102 qui sont analogues aux composants de l'élément de raccord 2 du premier mode de réalisation portent ici les mêmes références et ne sont pas décrits en détail, dans la mesure où la description ci-dessus peut leur être transposée.

L'élément de raccord 102 diffère de l'élément de raccord 2 notamment en ce que l'extension tubulaire 46 est omise. La bague de déverrouillage 70 est remplacée par une bague de déverrouillage 170 qui comporte, à la place du logement de guidage 72, une rainure hélicoïdale 168 analogue à la rainure hélicoïdale 68. La rainure hélicoïdale 168 forme une gorge dont l'axe suit une portion d'hélice circulaire. Le profil de la rainure projeté sur un plan normal à la tangente de la portion d'hélice est un arc de cercle dont le rayon est légèrement supérieur au diamètre de la bille 74. Mises à part ces différences, la bague de déverrouillage 170 est similaire à la bague de déverrouillage 70 et joue un même rôle que cette bague de déverrouillage 70.

La bague d'entraînement 58 est quant à elle remplacée par une bague d'entraînement 158 qui en diffère notamment en ce que la gorge 62 est remplacée par une rainure longitudinale 172. Cette rainure longitudinale 172 s'étend ici parallèlement à l'axe longitudinal X2.

Lorsque la bague de déverrouillage 170 est mise en rotation autour de l'axe longitudinal X2, la bille 74 parcourt la portion d'hélice définie par la rainure hélicoïdale 168 jusqu'à arriver en butée contre un bord de la rainure longitudinale 172. Elle entraîne alors la bague de déverrouillage 158 en déplacement longitudinal parallèlement à l'axe X2, ce qui déplace le pion de verrouillage 42 vers sa deuxième position.

Mises à part ces différences, l'accouplement et le désaccouplement de l'élément de raccord 2 avec l'orifice 4 s'effectuent de manière analogue avec celle décrite en référence à l'élément de raccord 2.

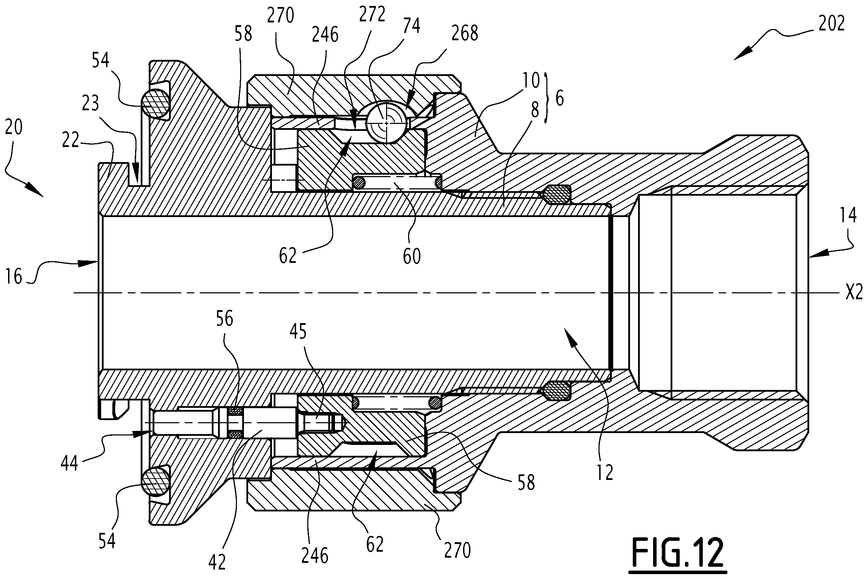

La figure 12 représente un élément de raccord 202 selon un troisième mode de réalisation de l'invention. Les composants de l'élément de raccord 202 qui sont analogues à l'élément de raccord 2 selon le premier mode de réalisation portent ici les mêmes références et ne sont pas décrits en détail, dans la mesure où la description ci-dessus peut leur être transposée.

L'élément de raccord 202 diffère notamment de l'élément de raccord 2 en ce que la bague de déverrouillage 70 est remplacée par une bague de déverrouillage 270 dans laquelle la rainure longitudinale 72 est remplacée par une rainure hélicoïdale 268 analogue à la rainure 68. L'extension tubulaire 46 est quant à elle remplacée par une extension tubulaire 246 pourvue d'une rainure longitudinale traversante 272.

La connexion ainsi que sa déconnexion de l'élément de raccord 202 avec l'orifice 4 s'effectuent suivant des manœuvres identiques à celles précédemment décrites.

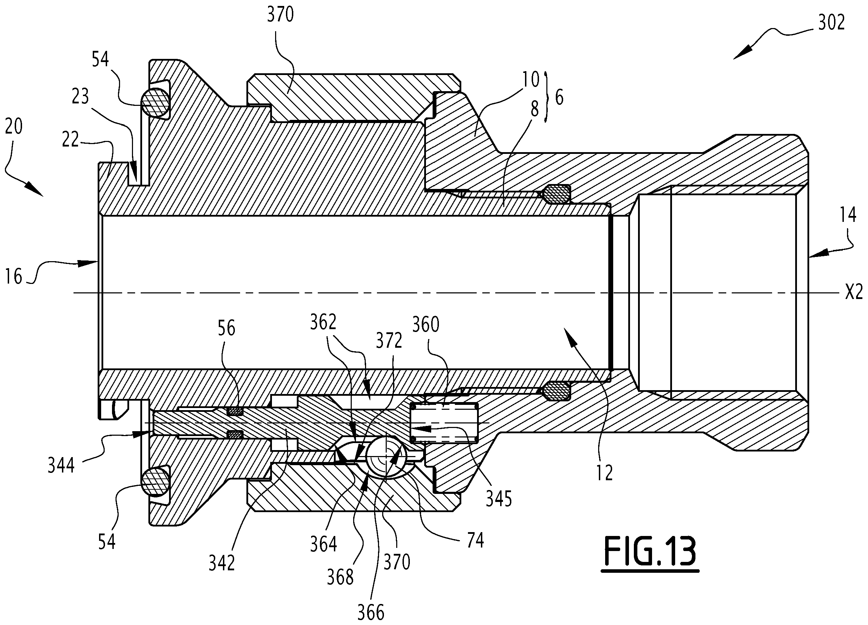

La figure 13 représente un élément de raccord 302 suivant un quatrième mode de réalisation de l'invention. Les composants de l'élément de raccord 302 qui sont analogues aux composants de l'élément de raccord 202 suivant le troisième mode de réalisation portent les mêmes références et ne sont pas décrits en détail, dans la mesure où la description ci-dessus peut leur être transposée.

L'élément de raccord 302 diffère notamment de l'élément de raccord 202 en ce que la bague d'entraînement 58 est omise. Chaque pion de verrouillage 342 est alors pourvu d'une gorge 362 externe analogue à la gorge 62, qui est disposée sur un pourtour extérieur de chaque pion de verrouillage 342 autour de l'axe X42 correspondant et délimitée par un bord distal 364 et un bord proximal 366. La bille 74 est reçue à l'intérieur de la rainure hélicoïdale 368, de la rainure longitudinale 372 et de la gorge 362. Les rainures 368 et 372 sont de formes analogues, respectivement, aux rainures 268 et 272. La bague de déverrouillage 370 est quant à elle semblable à la bague de déverrouillage 270.

L'organe de rappel 60 est remplacé par un organe de rappel 360, qui leur est sensiblement analogue mis à part qu'ici, l'organe de rappel 360 agit ici directement sur le pion de verrouillage 342. Par exemple, chaque pion de verrouillage 342 est soumis à l'action d'un organe de rappel 360, ici au niveau de sa face arrière 345. Par exemple, cet organe de rappel 360 est un ressort, tel qu'un ressort métallique de compression, ici disposé de façon coaxiale avec l'axe X42. On note « 344 » la face avant du pion de verrouillage 342. Les organes de rappel 360 permettent ainsi de rappeler individuellement chaque pion de verrouillage 342 vers sa première position.

La connexion et la déconnexion de l'élément de raccord 302 à l'orifice 4 de réservoir s'effectuent selon des manœuvres identiques à celles précédemment décrites.

Une telle construction permet notamment de gagner en compacité radiale, ce qui permet de réduire l'encombrement et de simplifier la construction de l'élément de raccord 302.

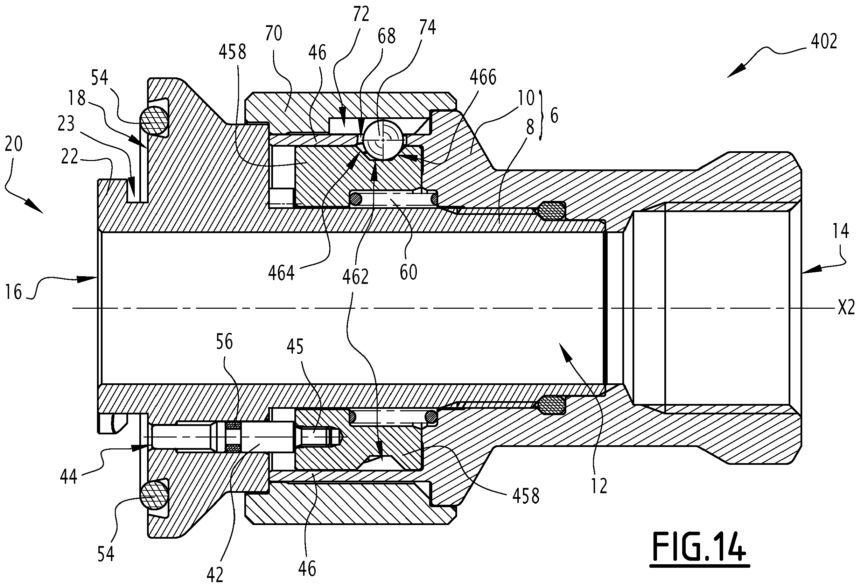

La figure 14 représente un élément de raccord 402 selon un cinquième mode de réalisation de l'invention. Les composants de l'élément de raccord 402 qui sont analogues à ceux de l'élément de raccord 2 selon le premier mode de réalisation portent ici les mêmes références et ne sont pas décrits en détail, dans la mesure où la description ci-dessus peut leur être transposée.

L'élément de raccord 402 diffère notamment de l'élément de raccord 2 en ce que la bague d'entraînement 58 est remplacée par une bague d'entraînement 458 qui comporte une gorge 462 étroite. La gorge 462 est analogue à la gorge 62, mis à part qu'elle est délimitée par un bord proximal 466 et par un bord distal 464 avec lesquels la bille 74 est en coopération étroite. Plus précisément, le profil de la gorge 462 dans un plan passant par l'axe longitudinal X2 est une portion de cercle dont le rayon est très légèrement supérieur à celui de la bille 74. Mises à part ces différences, la bague d'entraînement 458 joue le même rôle que la bague 58 et est sensiblement analogue à celle-ci.

Du fait de cette configuration, le déplacement des pions de verrouillage 42 vers leur position rétractée ne peut pas avoir lieu sans que la bague de déverrouillage 70 se mette à tourner autour de l'axe longitudinal X2.

Ainsi, pour pouvoir accoupler l'élément de raccord 402 avec l'orifice 4, il est impératif de laisser la bague de déverrouillage 70 libre de tourner par rapport au corps tubulaire 6.

Cette configuration permet de détecter facilement si les l'élément de raccord 402 et l'orifice 4 ne sont pas correctement maintenus verrouillés dans leur configuration accouplée parce que les pions de verrouillage 42 n'ont pas été complètement déplacés vers leur position avancée à l'issue de la phase d'accouplement.

En effet, dans ce mode de réalisation, le couplage mécanique est tel qu'un déplacement du pion de verrouillage 42 entre sa première position et sa deuxième position provoque un déplacement en rotation de la bague de déverrouillage 470 selon une certaine valeur angulaire prédéfinie. Cela est notamment dû à la structure de la gorge étroite 462, dont le bord distal 464 est en contact sur la bille 74 et appuie sur la bille 74 pour la pousser vers l'arrière dès que le pion de verrouillage 42 se déplace vers sa position rétractée, sous l'effet d'une force extérieure à l'élément de raccord 402.

Ainsi, lorsque le pion de verrouillage atteint sa première position, la bague de déverrouillage 470 doit se trouver dans une position angulaire prédéfinie. Si, à l'issue de la phase d'accouplement, le pion de verrouillage 42 n'a pas correctement atteint sa première position, alors la bague de déverrouillage 470 ne se trouve pas dans sa position angulaire prédéfinie. Il est ainsi possible de détecter visuellement une telle situation, par exemple en comparant la position de la bague de déverrouillage 470 avec sa position prédéfinie attendue, celle-ci pouvant être matérialisée sur la surface extérieure de l'élément de raccord 402 au moyen d'un ou plusieurs indicateurs visuels.

Grâce à cela, il est plus facile de détecter un défaut de connexion pouvant entraîner une déconnexion intempestive de l'élément de raccord 402 et donc de causer une fuite non souhaitée de fluide. La connexion fluidique réalisée au moyen de l'élément de raccord 402 est ainsi plus fiable et plus sûre. Une telle utilisation est particulièrement avantageuse lorsque l'élément de raccord 402 est employé dans le transport de liquides présentant des propriétés dangereuses.

Selon un autre mode de réalisation de l'élément de raccord 2, non illustré sur les figures, la rainure hélicoïdale recevant la bille 74 est réalisée sur la bague d'entraînement 58. La bague de déverrouillage 70 est alors pourvue d'une gorge en forme de rainure longitudinale, analogue à celle précédemment décrite, et coopérant avec la bille 74.

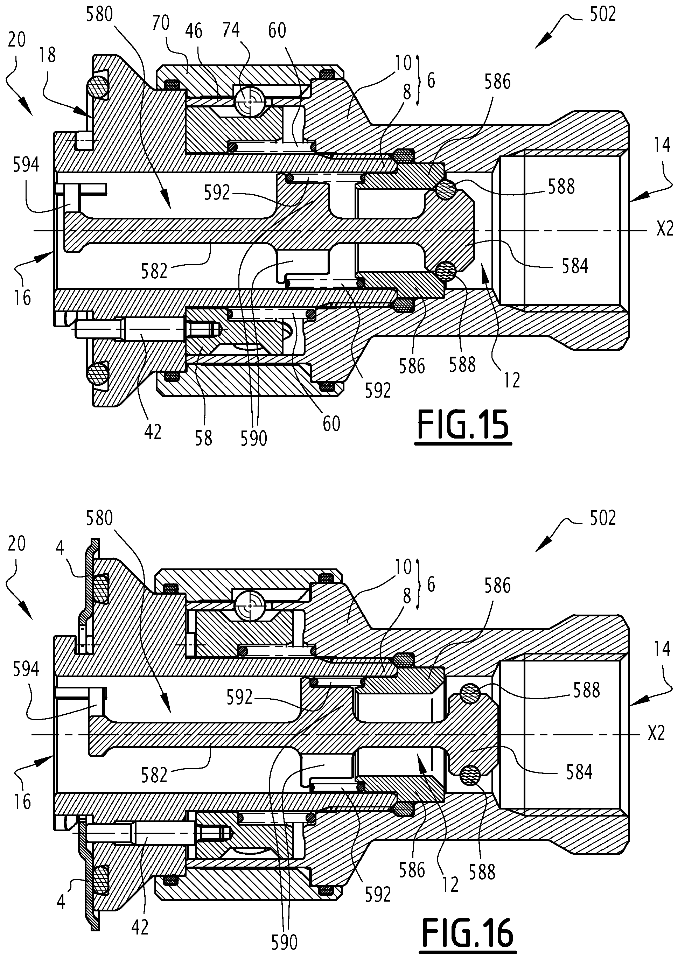

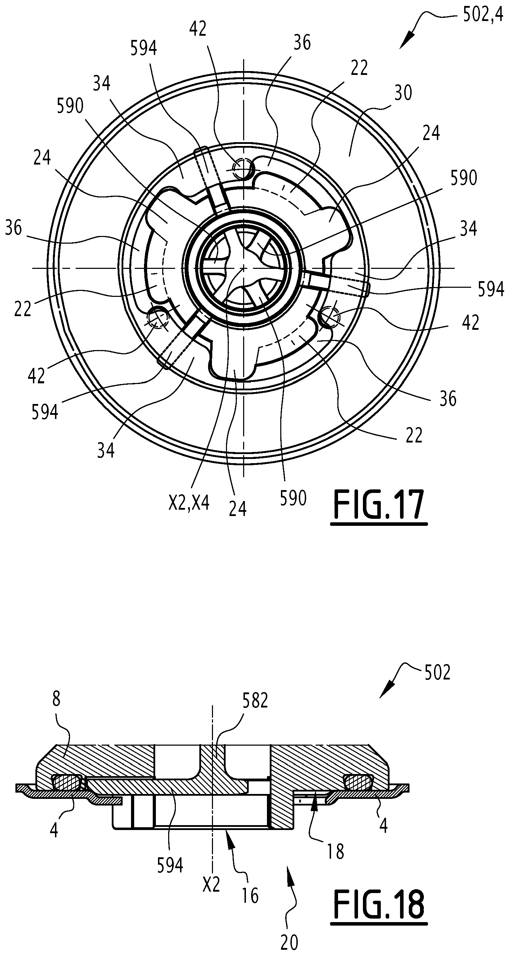

Les figures 15 à 18 représentent un élément de raccord 502 suivant un sixième mode de réalisation de l'invention. Les composants de l'élément de raccord 502 qui sont analogues à ceux de l'élément de raccord 2 selon le premier mode de réalisation portent d'ici les mêmes références et ne sont pas décrits en détail, dans la mesure où la description ci-dessus peut leur être transposée.

L'élément de raccord 502 diffère notamment de l'élément de raccord 2 en ce qu'il comporte en outre une soupape 580 mobile disposée à l'intérieur du corps tubulaire 6. Plus précisément, la soupape 580 est déplaçable entre une position fermée, illustrée à la figure 15 et empêchant la circulation de liquide dans le passage tubulaire 12 entre les ouvertures 14 et 16, et une position ouverte, illustrée à la figure 16, dans laquelle elle autorise le passage de liquide à l'intérieur du passage tubulaire 12 entre les ouvertures 14 et 16.

La soupape 580 comporte notamment un corps formé d'une tige 582, s'étendant longitudinalement le long de l'axe longitudinal X2, et d'une tête 584, solidaire avec la tige 582. Dans cet exemple, la tige 582 et la tête 584 sont formées d'un seul tenant et sont venues de matière l'une avec l'autre.

Par exemple, la soupape 580 est réalisée en métal, ou en plastique.

L'élément de raccord 502 comporte également un corps intérieur 586 qui est disposé ici à l'intérieur du passage tubulaire 12, par exemple au niveau de la jonction entre l'embout 8 et l'adaptateur 10. Ce corps intérieur 586 est destiné à coopérer avec la tête 584 de la soupape 580 en formant un rétrécissement du passage tubulaire 12 avec un diamètre de passage correspondant aux dimensions de la tête 584.

Comme visible aux figures 15 et 16, lorsque la soupape 580 est dans la position fermée, la tête 584 est en contact avec le corps intérieur 586 pour empêcher le passage d'un liquide. Lorsque la soupape 580 est dans la position ouverte, la tête 584 est éloignée à distance du corps intérieur 586, autorisant ainsi un passage du liquide entre les bords de la tête 584 et du corps intérieur 586.

Avantageusement, la tête 584 est pourvue d'un joint torique 588 qui permet d'assurer une bonne étanchéité lorsque la soupape 580 est dans la position fermée, ce joint torique 588 venant alors en contact direct avec le corps intérieur 586.

Le joint torique 588 est par exemple réalisé en un matériau élastomère, tel que le silicone.

La soupape 580 comporte en outre des bras radiaux 590 d'ancrage qui s'étendent radialement par rapport à la tige 582. Ces bras radiaux 590 sont ici au nombre de trois et sont disposés de façon équidistante autour de la tige 582, par exemple avec une disposition en étoile en faisant un angle de 120° l'un par rapport à l'autre dans un plan perpendiculaire à l'axe longitudinal X2.

Les bras radiaux 590 se prolongent jusqu'à l'alésage de l'embout 8 et permettent le guidage en translation de la soupape 582 dans le passage tubulaire 12. Un organe de rappel élastique 592 est monté entre le corps intérieur 586 et les bras radiaux 590. L'organe de rappel 592 est agencé pour exercer une force de rappel élastique qui tend à ramener la soupape 580 vers sa position fermée. Par exemple, l'organe de rappel 592 est un ressort hélicoïdal compression.

La soupape 580 comporte en outre des palpeurs 594 rigides qui s'étendent radialement depuis une partie avant de la tige 582. Par exemple, les palpeurs 594 s'étendent depuis l'extrémité avant de la tige 582. Les palpeurs 594 sont ici au nombre de trois et sont identiques entre eux. Par exemple, ces palpeurs 594 sont disposés en étoile avec un angle de 120° l'un par rapport à l'autre, cet angle étant mesuré dans un plan géométrique perpendiculaire à l'axe longitudinal X2.

De préférence, les palpeurs 594 émergent de la surface d'appui 18 vers l'extérieur de l'élément de raccord 502, lorsque la soupape 580 est en position fermée. Ces palpeurs 594 présentent ici une longueur supérieure à la moitié du diamètre D1, cette longueur étant mesurée dans un plan géométrique perpendiculaire à l'axe longitudinal X2 depuis le centre de la tige 582.

Les palpeurs 594 sont ainsi destinés à entrer en contact avec la plaque 30 de l'orifice 4 de réservoir lors de la phase d'accouplement de l'élément de raccord 502 avec l'orifice 4. En d'autres termes, la soupape 580 est configurée pour être déplacée vers sa position ouverte grâce à la force d'appui exercée par l'orifice 4 sur les palpeurs 594 lorsque l'élément de raccord 502 est mis en contact avec l'orifice 4 de réservoir. Cette force d'appui surpasse la force de rappel exercée par l'organe de rappel 592, permettant ainsi un déplacement de la soupape 580 vers sa position ouverte.

De fait, le passage du liquide à l'intérieur du passage tubulaire 12 n'est autorisé qu'une fois que l'élément de raccord 502 est accouplé avec l'orifice 4, ce qui réduit le risque de fuite de fluide.

Lorsque l'élément de raccord 502 est désaccouplé de l'orifice de réservoir 4, la soupape 580 est ramenée dans sa position fermée par l'organe de rappel 592. Le liquide provenant de la conduite couplée à l'ouverture 14 est alors empêché de circuler à l'intérieur du passage tubulaire 12.

Ce mode de réalisation peut avantageusement être mis en œuvre indépendamment de la nature du couplage mécanique entre la bague de déverrouillage 70 et les pions de verrouillage 42. Ainsi, la soupape 580 et le corps intérieur 586 peuvent être intégrés au sein de l'un quelconque des éléments de raccord précédemment décrits.

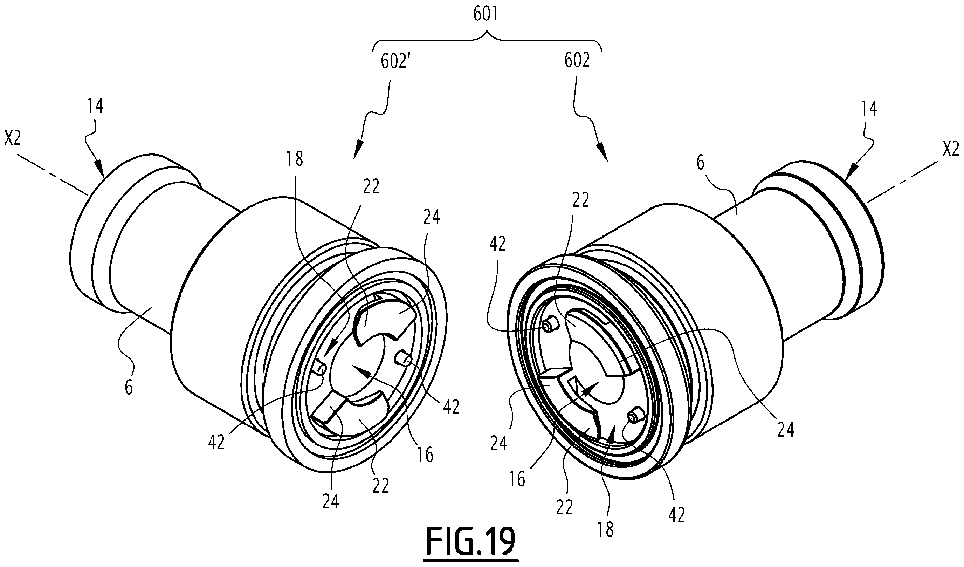

Enfin, la figure 19 représente un septième mode de réalisation de l'invention. Les éléments de ce septième mode de réalisation qui sont analogues à ceux du premier mode de réalisation portent les mêmes références numériques et ne sont pas décrits plus en détail, dans la mesure où la description ci-dessus peut leur être transposée.

En particulier, cette figure 19 représente un ensemble 601 comprenant un premier élément de raccord 602 et un deuxième élément de raccord 602'.

Les éléments de raccord 602 et 602' sont ici identiques entre eux. Ils sont analogues à l'élément de raccord 2 selon le premier mode de réalisation et n'en diffèrent que par le nombre de sections de prise S22 et donc par le nombre de portions de collerette 22, qui sont ici au nombre de deux. Le nombre de butées 24 et de pions de verrouillage 42 est adapté en conséquence et est ici de même égal à deux. En variante, ce nombre peut être différent.

Les éléments de raccord 602 et 602' sont aptes à être accouplés l'un avec l'autre pour former le raccord 601, de manière à permettre le transfert d'un liquide. A cet effet, chaque élément de raccord 602, 602' est connecté à une conduite de fluide au niveau de son ouverture 14. Le raccord 601 permet ainsi de faire circuler un fluide entre deux conduites.

L'élément de raccord 602' forme ici un élément complémentaire à l'élément de raccord 602, et vice versa. En particulier, les portions de collerette 22 de l'élément de raccord 602 forment des dents aptes à coopérer avec les portions de collerette 22 de l'élément de raccord 602' de façon analogue à ce qui a été décrit en référence aux dents 34. Les éléments 602 et 602' sont dits « hermaphrodites », par opposition aux éléments de raccord « mâle » ou « femelle » par ailleurs connus.

Toutefois en variante, l'un ou l'autre des éléments de raccord 602 et 602', voire même les deux, peuvent être selon l'un quelconque des modes de réalisation précédemment décrits.

En particulier, au moins l'un ou l'autre des éléments de raccord 602 et 602' peut comporter, de façon optionnelle, une soupape analogue à la soupape 580 précédemment décrite. Cependant, dans un tel cas, le nombre et la disposition spatiale des palpeurs 594 sont modifiés de façon à éviter qu'ils ne viennent entraver le déplacement des pions de verrouillage 42 ou encore le cheminement des dents 34 lors des opérations d'accouplement et de désaccouplement. Par exemple, une telle soupape comporte un seul palpeur 594.

Dans les modes de réalisation décrits, les rainures hélicoïdales suivent une portion d'hélice circulaire dont l'angle α de la tangente en chaque point par rapport à l'axe longitudinal X2 est constant et égal à 45 degrés. L'invention fonctionne également pour un angle α choisi entre 30 et 60 degrés. De même, il peut être envisagé de faire varier l'angle α le long de la rainure hélicoïdale dans la plage de 30 à 60 degrés. Il est alors possible de donner une certaine progressivité au mouvement des pions de verrouillage 42.

Dans les modes de réalisation décrits, les rainures hélicoïdales sont associées à des rainures longitudinales qui sont strictement parallèles à l'axe longitudinal X2. Elles pourraient également suivre une portion d'hélice dont l'angle de la tangente serait légèrement incliné, par exemple de 5 degré par rapport à l'axe longitudinal X2.

Les modes de réalisation et les variantes envisagés ci-dessus peuvent être combinés entre eux pour générer de nouveaux modes de réalisation.

## Revendications

1. Elément de raccord (2 ; 102 ; 202 ; 302 ; 402 ; 502 ; 602, 602') pour connecter une conduite de fluide à un élément complémentaire, notamment à un orifice (4) d'un réservoir, cet élément de raccord (2 ; 102 ; 202 ; 302 ; 402 ; 502 ; 602, 602') comprenant un corps tubulaire (6) s'étendant selon un axe longitudinal (X2), le corps tubulaire étant muni, à une extrémité, d'une interface de connexion (14) à une conduite de fluide et étant également muni, à une extrémité opposée, d'un élément de prise (22), l'élément de prise s'étendant longitudinalement par rapport à une surface d'appui (18) perpendiculaire à l'axe longitudinal et comprenant une portion de collerette radiale (22) orientée vers l'extérieur de l'axe longitudinal (X2) et s'étendant sur un secteur angulaire de prise (S22), l'élément de raccord (2 ; 102 ; 202 ; 302 ; 402 ; 502 ; 602, 602') comprenant également :
• au moins un pion de verrouillage (42 ; 342) mobile en translation à l'intérieur du corps tubulaire (6), parallèlement à l'axe longitudinal (X2), entre une première position dans laquelle il émerge de la surface d'appui (18) et une deuxième position dans laquelle il est reculé par rapport à la surface d'appui (18) à l'intérieur du corps tubulaire (6),
• un organe de rappel (60 ; 360) destiné à ramener le pion de verrouillage (42 ; 342) vers sa première position,
• une bague de déverrouillage (70 ; 170 ; 270 ; 370 ; 470), entourant le corps tubulaire (6), à l'extérieur de celui-ci, la bague de déverrouillage étant mobile en rotation autour de l'axe longitudinal (X2),
l'élément de raccord (2 ; 102 ; 202 ; 302 ; 402 ; 502 ; 602, 602') étant **caractérisé en ce que** la bague de déverrouillage (70 ; 170 ; 270 ; 370 ; 470) est couplée mécaniquement au pion de verrouillage (42 ; 342) au moyen d'une bille (74) et d'une rainure hélicoïdale (68 ; 168 ; 268 ; 368) de guidage de la bille, de manière à transformer le mouvement de rotation de la bague de déverrouillage (70 ; 170 ; 270 ; 370 ; 470) autour de l'axe longitudinal (X2) en un mouvement de translation du pion de verrouillage (42 ; 342) depuis sa première position vers sa deuxième position.

2. Elément de raccord (2 ; 402) selon la revendication 1, **caractérisé en ce que** la rainure hélicoïdale (68) traverse une partie (46) du corps tubulaire (6), **en ce que** la bague de déverrouillage (70) comporte un logement de guidage longitudinal (72), la bille (74) étant reçue à l'intérieur de la rainure hélicoïdale (68) et du logement de guidage (72) pour être guidée.

3. Elément de raccord (202) selon la revendication 1, **caractérisé en ce que** la rainure hélicoïdale (268) est ménagée sur une surface interne de la bague de déverrouillage (270), **en ce qu'**une rainure longitudinale (272) traverse une partie (246) du corps longitudinal, la bille (74) étant reçue à l'intérieur de la rainure hélicoïdale et du logement de guidage pour être guidée.

4. Elément de raccord (102 ; 302) selon la revendication 1, **caractérisé en ce que** la rainure hélicoïdale (168 ; 368) est ménagée sur une surface interne de la bague de déverrouillage (170 ; 370), **en ce qu'**une rainure longitudinale (162 ; 362) est solidaire du pion de verrouillage (42 ; 342), la bille (74) étant reçue à l'intérieur de la rainure hélicoïdale et de la rainure longitudinale pour être guidée.

5. Elément de raccord (2 ; 102 ; 202 ; 302 ; 402 ; 502) selon l'une quelconque des revendications précédentes, **caractérisé en ce que** la bille (74) coopère avec une gorge (62 ; 162 ; 262 ; 362 ; 462) solidaire du pion de verrouillage (42 ; 342), cette gorge étant délimitée suivant l'axe longitudinal (X2) par un bord proximal (66 ; 466), la bille (74) étant en outre reçue à l'intérieur de cette gorge (62 ; 162 ; 262 ; 362 ; 462) et appuie sur ce bord proximal (66 ; 466) pour entraîner le pion de verrouillage (42 ; 342) vers sa deuxième position.

6. Elément de raccord (2 ; 102 ; 202 ; 402 ; 502) selon la revendication 5, **caractérisé en ce que** le pion de verrouillage (42) est solidaire d'une bague d'entraînement (58 ; 158 ; 258) mobile en translation le long de l'axe longitudinal (X2), **en ce que** la gorge (62 ; 162 ; 262 ; 462) est ménagée sur cette bague d'entraînement et **en ce que** l'organe de rappel (60) agit sur la bague d'entraînement.

7. Elément de raccord (302) selon la revendication 5, **caractérisé en ce que** la gorge (362) est ménagée directement sur le pion de verrouillage (342) et forme la rainure longitudinale solidaire du pion de verrouillage (342) et **en ce que** l'organe de rappel (360) agit directement sur le pion de verrouillage (342).

8. Elément de raccord (402) selon l'une des revendications 6 ou 7, **caractérisé en ce que** la gorge (462) est également délimitée par un bord distal (464), de sorte que le bord distal (464) soit en contact avec la bille (74) et appuie sur la bille (74) lorsque le pion de verrouillage (42) est déplacé vers sa deuxième position sous l'effet d'une force extérieure à l'élément de raccord (402).

9. Elément de raccord (502) selon l'une quelconque des revendications précédentes, **caractérisé en ce qu'**il comporte une soupape (580) mobile en translation, à l'intérieur du corps tubulaire (6), entre une position de fermeture de passage du fluide et une position d'ouverture du passage du fluide, la soupape (580) comprenant un palpeur (594) rigide qui émerge de la surface d'appui (18) lorsque la soupape (580) est dans la position de fermeture.

10. Elément de raccord (2 ; 102 ; 202 ; 302 ; 402 ; 502 ; 602, 602') selon l'une quelconque des revendications précédentes, **caractérisé en ce que** la rainure hélicoïdale (68 ; 168 ; 268 ; 368) de guidage de la bille (74) suit une portion d'hélice circulaire dont l'angle (a) de la tangente en chaque point par rapport à l'axe longitudinal (X2) est compris entre 30 et 60 degrés.

11. Elément de raccord (2 ; 102 ; 202 ; 302 ; 402 ; 502 ; 602, 602') selon la revendication 10, **caractérisé en ce que** l'angle (a) de la tangente en chaque point par rapport à l'axe longitudinal (X2) est constant.

12. Raccord (601) comprenant un premier élément de raccord (602) et un deuxième élément de raccord (602'), au moins l'un des premier et deuxième éléments de raccord étant selon l'une quelconque des revendications précédentes.

## Patentansprüche

1. Kupplungselement (2; 102; 202; 302; 402; 502; 602, 602') zum Verbinden einer Fluidleitung mit einem komplementären Element, insbesondere mit einer Öffnung (4) eines Behälters, wobei dieses Kupplungselement (2; 102; 202; 302; 402; 502; 602, 602') einen rohrförmigen Körper (6) aufweist, der sich gemäß einer Längsachse (X2) erstreckt, wobei der rohrförmige Körper an einem Ende mit einer Verbindungsschnittstelle (14) zu einer Fluidleitung ausgerüstet ist und außerdem an einem entgegengesetzten Ende mit einem Aufnahmeelement (22) versehen ist, wobei sich das Aufnahmeelement in Bezug auf eine senkrecht zur Längsachse liegenden Abstützfläche (18) in Längsrichtung erstreckt und einen radialen Aufnahmeflanschbereich (22) umfasst, der zu der Längsachse (X2) nach außen gerichtet ist und sich über einen Aufnahmewinkelsektor (S22) erstreckt, wobei das Kupplungselement (2; 102; 202; 302; 402; 502; 602, 602') außerdem umfasst:
• mindestens einen Verriegelungsstift (42; 342), der im Inneren des rohrförmige Körpers (6) parallel zu Längsachse (X2) zwischen einer ersten Position, in der er aus der Abstützfläche (18) hervortritt, und einer zweiten Position, bei der er in Bezug auf die Abstützfläche (18) in das Innere des rohrförmige Körpers (6) zurückgezogen ist, beweglich ist,
• ein Rückstellelement (60; 360), das vorgesehen ist, den Verriegelungsstift (42; 342) in seine erste Position zurückzubringen,
• eine Verriegelungshülse (70; 170; 270; 370; 470), die den rohrförmigen Körper (6) an seiner Außenseite umgibt, wobei die Verriegelungshülse um die Längsachse (X2) drehbeweglich ist,
wobei das Kupplungselement(2; 102; 202; 302; 402; 502; 602, 602') **dadurch gekennzeichnet ist, dass** die Verriegelungshülse (70; 170; 270; 370; 470) mechanisch mit dem Verriegelungsstift (42; 342) mittels einer Kugel (74) und einer spiralförmigen Nut (68; 168; 268; 368) zur Führung der Kugel gekoppelt ist, derart dass die Drehbewegung der Verriegelungshülse (70; 170; 270; 370; 470) um die Längsachse (X2) in eine Längsbewegung des Verriegelungsstiftes (42; 342) von seiner ersten Position in seine zweite Position umgewandelt wird.

2. Kupplungselement (2; 402) nach Anspruch 1, **dadurch gekennzeichnet, dass** die spiralförmige Nut (68) einen Teil (46) des rohrförmige Körpers (6) überquert, dass die Verriegelungshülse (70) eine Längsführungsaufnahme (72) aufweist, wobei die Kugel (74) im Inneren der spiralförmigen Nut (68) und der Führungsaufnahme (72) zu ihrer Führung aufgenommen ist.

3. Kupplungselement (202) nach Anspruch 1, **dadurch gekennzeichnet, dass** die spiralförmige Nut (268) in einer Innenfläche der Verriegelungshülse (270) eingearbeitet ist, dass eine Längsnut (272) einen Teil des Längskörpers überquert, wobei die Kugel (74) im Inneren der spiralförmigen Nut und der Führungsaufnahme zu ihrer Führung aufgenommen ist.

4. Kupplungselement (102; 302) nach Anspruch 1, **dadurch gekennzeichnet, dass** die spiralförmige Nut (168; 368) in einer Innenfläche der Verriegelungshülse (170; 370) eingearbeitet ist, dass eine Längsnut (162; 362) fest in dem Verriegelungsstift (42; 342) angebracht ist, wobei die Kugel (74) im Inneren der spiralförmigen Nut und der Längsnut zu ihrer Führung aufgenommen ist.

5. Kupplungselement (2; 102; 202; 302; 402; 502) nach einem beliebigen der vorhergehenden Ansprüche, **dadurch gekennzeichnet, dass** die Kugel (74) mit einer fest in dem Verriegelungsstift (42; 342) angebrachten Ausnehmung (62; 162; 262; 362; 462) zusammenarbeitet, wobei diese Ausnehmung gemäß der Längsachse (X2) durch einen proximalen Rand (66; 466) begrenzt ist und die Kugel (74) außerdem im Inneren dieser Ausnehmung (62; 162; 262; 362; 462) aufgenommen ist und an diesem proximalen Rand (66; 466) anliegt, um den Verriegelungsstift (42; 342) in seine zweite Position mitzunehmen.

6. Kupplungselement (2; 102; 202; 402; 502) nach Anspruch 5, **dadurch gekennzeichnet, dass** der Verriegelungsstift (42) mit einer Mitnahmehülse (58; 158; 258) verbunden ist, die entlang der Längsachse (X2) in Längsrichtung beweglich ist, dass die Ausnehmung (62; 162; 262; 462) in diese Mitnahmehülse eingearbeitet ist und dass das Rückstellelement (60) auf die Mitnahmehülse wirkt.

7. Kupplungselement nach Anspruch 5, **dadurch gekennzeichnet, dass** die Ausnehmung (362) direkt in dem Verriegelungsstift (342) eingearbeitet ist und die in dem Verriegelungsstift (342) angebrachte Längsnut bildet und dass das Rückstellelement (360) direkt auf den Verriegelungsstift (342) wirkt.

8. Kupplungselement (402) nach einem der Ansprüche 6 oder 7, **dadurch gekennzeichnet, dass** die Ausnehmung (462) gleichfalls von einem distalen Rand (464) begrenzt ist, derart dass der distale Rand (464) in Kontakt mit der Kugel (74) ist und an der Kugel (74) anliegt, wenn der Verriegelungsstift (42) durch die Wirkung einer Außenkraft auf das Kupplungselement (402) in seine zweite Position verschoben wird.

9. Kupplungselement (502) nach einem beliebigen der vorhergehenden Ansprüche, **dadurch gekennzeichnet, dass** es ein Ventil (580) aufweist, das in Längsrichtung im Inneren des rohrförmige Körpers (6) zwischen einer Stellung des Verschließens des Fluiddurchgangs und einer Stellung des Öffnens des Fluiddurchganges beweglich ist, wobei das Ventil (580) ein starres Tastelement (594) umfasst, das aus der Abstützfläche (18) hervortritt, wenn das Ventil (580) in seiner Verschlussstellung ist.

10. Kupplungselement (2; 502; 202; 302; 402; 502; 602, 602') nach einem beliebigen der vorhergehenden Ansprüche, **dadurch gekennzeichnet, dass** die spiralförmige Nut (68; 168; 268; 368) zur Führung der Kugel (74) einem kreisförmigen Spiralbereich verfolgt, dessen Tangentenwinkel (a) an jedem Punkt in Bezug auf die Längsachse (X2) zwischen 30 und 60° liegt.

11. Kupplungselement (2; 102; 202; 302; 402; 502; 602, 602') nach Anspruch 10, **dadurch gekennzeichnet, dass** der Tangentenwinkel (a) in jedem Punkt in Bezug auf die Längsachse (X2) konstant ist.

12. Kupplung (601) ein erstes Kupplungselement (602) und ein zweites Kupplungselement (602') umfassend, wobei mindestens eines des ersten und zweiten Kupplungselementes nach einem beliebigen der vorhergehenden Ansprüche ausgebildet ist.

## Claims

1. Coupling element (2; 102; 202; 302; 402; 502; 602, 602') for connecting a fluid line to a complementary element, in particular to an orifice (4) of a reservoir, wherein this coupling element (2; 102; 202; 302; 402; 502; 602, 602') comprises a tubular body (6) extending along a longitudinal axis (X2), wherein the tubular body is provided at one end with a connection interface (14) to a fluid line and is also provided at an opposite end with an engagement member (22), wherein the gripping member extends longitudinally with respect to a support surface (18) that is perpendicular to the longitudinal axis and comprises a radial portion of a flange (22) facing outwards from the longitudinal axis (X2) and extending over an angular engagement sector (S22), wherein the coupling element (2; 102; 202; 302; 402; 502; 602, 602') further comprises:
- at least one locking pin (42; 342) movable in translation inside the tubular body (6), parallel to the longitudinal axis (X2), between a first position in which it emerges from the support surface (18) and a second position in which it is retracted from the support surface (18) inside the tubular body (6),
- a return member (60; 360) for returning the locking pin (42; 342) to its first position;
- an unlocking ring (70; 170; 270; 370; 470) surrounding the tubular body (6), wherein the unlocking ring is rotatable about the longitudinal axis (X2)
wherein the coupling element (2; 102; 202; 302; 402; 502; 602, 602') is **characterized in that** the unlocking ring (70; 170; 270; 370; 470) is mechanically coupled to the locking pin (42; 342) by means of a ball (74) and a helical groove (68; 168; 268; 368) to guide the ball so as to transform the rotational movement of the unlocking ring (70; 170; 270; 370; 470) about the longitudinal axis (X2) into a translation movement of the locking pin (42; 342) from its first position to its second position.

2. Coupling element (2; 402) according to claim 1, **characterized in that** the helical groove (68) passes through a portion (46) of the tubular body (6), and **in that** the unlocking ring (70) comprises a longitudinal guide housing (72), wherein the ball (74) is received within the helical groove (68) and the guide housing (72) to be guided.

3. Coupling element (202) according to claim 1, **characterized in that** the helical groove (268) is formed on an inner surface of the unlocking ring (270), and **in that** a longitudinal groove (272) passes through a portion (246) of the longitudinal body, wherein the ball (74) is received within the helical groove and the guide housing to be guided.

4. Coupling element (102; 302) according to claim 1, **characterized in that** the helical groove (168; 368) is provided on an inner surface of the unlocking ring (170; 370), and that a longitudinal groove (162; 362) is integral with the locking pin (42; 342), wherein the ball (74) is received within the helical groove and the longitudinal groove to be guided.

5. Coupling element (2; 102; 202; 302; 402; 502) according to any one of the preceding claims, **characterized in that** the ball (74) interacts with a groove (62; 162; 262; 362; 462) that is integral with the locking pin (42; 342), wherein this groove is delimited along the longitudinal axis (X2) by a proximal edge (66; 466), wherein the ball (74) is further received within this groove (62; 162; 262; 362; 462) and presses on this proximal edge (66; 466) to drive the locking pin (42; 342) to its second position.

6. Coupling element (2; 102; 202; 402; 502) according to claim 5, **characterized in that** the locking pin (42) is integral with a drive ring (58; 158; 258) movable in translation along the longitudinal axis (X2), and **in that** the groove (62; 162; 262; 462) is provided on the drive ring and **in that** the return member (60) acts on the drive ring.

7. Coupling element (302) according to claim 5, **characterized in that** the groove (362) is formed directly on the locking pin (342) and forms the longitudinal groove that is integral with the locking pin (342) and **in that** that the return member (360) acts directly on the locking pin (342).

8. Coupling element (402) according to one of the claims 6 or 7, **characterized in that** the groove (462) is also delimited by a distal edge (464), so that the distal edge (464) contacts the ball (74) and presses the ball (74) when the locking pin (42) is moved to its second position under the effect of a force external to the coupling element (402).

9. Coupling element (502) according to any one of the preceding claims, **characterized in that** it comprises a valve (580) movable in translation inside the tubular body (6), between a closed fluid passage position and an open fluid passage position, wherein the valve (580) comprises a rigid probe (594) which emerges from the support surface (18) when the valve (580) is in the closed position.

10. Coupling element (2; 102; 202; 302; 402; 502; 602, 602') according to any one of the preceding claims, **characterized in that** the helical groove (68; 168; 268; 368) for guiding the ball (74) follows a circular helix portion whose tangential angle (α) at each point with respect to the longitudinal axis (X2) is between 30 and 60°.

11. Coupling element (2; 102; 202; 302; 402; 502; 602; 602') according to claim 10, **characterized in that** the tangential angle (α) at each point relative to the longitudinal axis (X2), is constant.

12. Connector (601) comprising a first coupling element (602) and a second coupling element (602'), wherein at least one of the first and second coupling elements is as claimed in any one of the preceding claims.
